# EUROPEAN PATENT APPLICATION

(11) **EP 4 620 428 A1**
(43) Date of publication of application: **24.09.2025**
(21) Application number: 25164128.8
(22) Date of filing: 17.03.2025
(51) Int. Cl.: A61C 5/20, A61C 13/00, A61C 13/34

(54) **METHOD FOR THE DESIGN AND SUBSEQUENT PRODUCTION OF DENTAL OVERLAYS BY DIRECT MOCK-UP, AND DENTAL OVERLAYS PRODUCED ACCORDING TO SUCH METHOD**

(30) Priority: 18.03.2024 IT 202400005899
(71) Applicant: Lastruttura S.p.A., 21012 Cassano Magnago (VA) (IT)
(72) Inventor: CAMPANA, Adriano, 21020 BRUNELLO VA (IT)
(74) Representative: Modiano, Micaela Nadia

(57) **Abstract**

A method for the design and subsequent production of dental overlays (107, 134-137, 144-147) by direct mock-up, the method comprising: a first step, in which ideal dental morphologies are designed which are aimed at correcting one or more aesthetic and possibly functional defects of the set of teeth of a patient, the set of teeth (90) comprising a front group (7), in particular a canine-to-canine group, and diatoric sectors (6, 8); and a second step, in which the dental overlays (107, 134-137, 144-147) are produced as physical objects containing an impression of the ideal dental morphologies; the first and second steps entail, respectively, the design and production of: diatoric overlays (134-137; 144-147), intended for respective teeth (34-37; 44-47) in the diatoric sectors (6; 8), and a front overlay (107), intended for the management of the front group (7).

## Description

The present invention relates to a method for the design and subsequent production of dental overlays by direct mock-up, and to a kit of dental overlays produced according to the aforementioned method.

In particular, the method according to the invention entails the production of dental overlays by direct mock-up deriving from a digital design of CAD (Computer-Aided Design) type.

The dental overlays produced by the abovementioned method are particularly useful and practical in a direct mock-up.

As is known, in the sector of dentistry and orthodontics and the like, the term "direct mock-up" means a modification of the outward appearance of the dental arches of a patient. Typically, this modification is executed by direct application of a composite or of similar materials, which are adapted to modify the shape of those dental arches in order to improve their appearance and optionally their function.

As is likewise known, a direct mock-up is a rapid and painless procedure that is executed directly on the set of teeth of the patient, additively and non-invasively, removing and adding shape and color in a manner that is totally reversible, without any damage to the natural surfaces of the teeth and without substantial risks to the health of the patient.

Basically, a direct mock-up procedure can serve to give the patient a visual preview of the result that can be obtained from a potential subsequent prosthetic operation. Furthermore, a direct mock-up procedure can be availed of to execute a definitive additive procedure on patients with scant available spaces (which would not be amenable to the execution of inlays or "table tops"), or on patients who do not wish to intervene subtractively and invasively on their natural teeth, to render the treatment reversible.

Typically, each direct mock-up procedure occurs as follows. In a first step, one or more dental overlays are positioned on the portion of the set of teeth on which it is intended to intervene, where each dental overlay is contoured so as to contain the impression of a respective desired dental morphology. In a second step, the desired dental morphology is reproduced on the respective portion of the set of teeth, by direct packing of a composite material in the oral cavity.

As is known, dental overlays by direct mock-up are produced using a method that comprises at least two steps.

In a first step, ideal dental morphologies are designed, which are aimed at correcting at least one aesthetic (and optionally functional) defect of the set of teeth. In a second step, the actual dental overlays themselves are produced (which can be vacuum-formed and especially constructed in silicone), as physical objects containing an impression of the ideal dental morphologies.

However, the conventional techniques for making dental overlays by direct mock-up are anything but optimized. Therefore, further contributions in this technological field are necessary.

The aim of the present invention is to overcome the limitations of the background art, by optimizing the production of dental overlays intended for a direct mock-up.

Within this aim, an object of the present invention is to improve the quality of dental overlays produced by direct mock-up.

Another object of the present invention is to produce dental overlays that are more precise than those obtainable from conventional techniques for the production of dental overlays by direct mock-up.

Another object of the present invention is to improve the fidelity of dental overlays produced by direct mock-up to a model, in particular by combining the precision of CAD-CAM systems with the need to execute mock-up interventions in complex cases of rehabilitation or occlusal rises, including "no-prep" interventions (where "no-prep" means, as is known, a mock-up procedure that requires neither prior preparation of the dental surface nor, still less, removal of healthy dental tissue). In this context, the invention sets out to exploit the advantages of "Digital Smile Design", a digital technique that avails of a software design program to give the patient a visual preview of his or her new smile before undergoing an aesthetic dental treatment for real.

A still further object of the invention is to provide a production method that is capable of ensuring the presence of ideal dental morphologies within the dental overlays.

Another object of the invention is to provide dental overlays that are more practical to use by a clinic during a direct mock-up procedure.

Another object of the invention is to provide dental overlays that are capable of offering greater control than classic vacuum-formed overlays.

Another object of the present invention is to produce dental overlays by direct mock-up which are capable of offering a high degree of sanitizability.

Yet another object of the invention is to facilitate the management of oral hygiene by the patient following a direct mock-up procedure.

A further object of the invention is to produce dental overlays by direct mock-up that are highly versatile and simple to use.

Another object of the invention is to provide dental overlays that can be used even with a dam mounted.

Another object of the invention is to produce dental overlays by direct mock-up that can ensure the designed shape is maintained, in particular facilitating the egress of excess composite material and avoiding having areas where such composite material did not manage to reach.

Another object of the invention is to produce dental overlays by direct mock-up that are highly customizable.

Not least an object of the present invention is to provide dental overlays by direct mock-up that are highly reliable, easily and practically implemented, and the production of which is economically competitive if compared to conventional techniques.

This aim and these and other objects which will become more apparent hereinafter are achieved by a method according to claim 1.

The above aim and objects are also achieved by a kit of dental overlays produced by direct mock-up according to the independent claim 9. The beneficial effects of the invention are particularly pronounced when the aforementioned kit is used in an aesthetic direct mock-up procedure.

Further characteristics and advantages of the present invention will become more apparent from the description of a preferred, but not exclusive, embodiment of the method according to the invention, illustrated by way of non-limiting example with the aid of the accompanying drawings wherein:
Figure 1A is a front elevation view of a model of the set of teeth of a patient;
Figures 1B and 1C are front elevation views illustrating the steps of design and subsequent production of a dental overlay intended for a direct mock-up procedure on a front sector of the set of teeth shown in Figure 1A;
Figure 2 is a perspective detail view in which the dental overlay shown in Figure 1C is positioned on the set of teeth of the patient, in preparation for the direct mock-up procedure on the front sector;
Figure 3 is a longitudinal cross-sectional view taken along the plane marked III-III of the dental overlay shown in Figure 2 and the portion of the set of teeth underlying this same dental overlay;
Figure 4 is the view of Figure 3 at the end of the direct mock-up procedure on the front sector;
Figures 5A to 5H are perspective views illustrating an individualized production of dental overlays intended for a direct mock-up procedure in diatoric sectors;

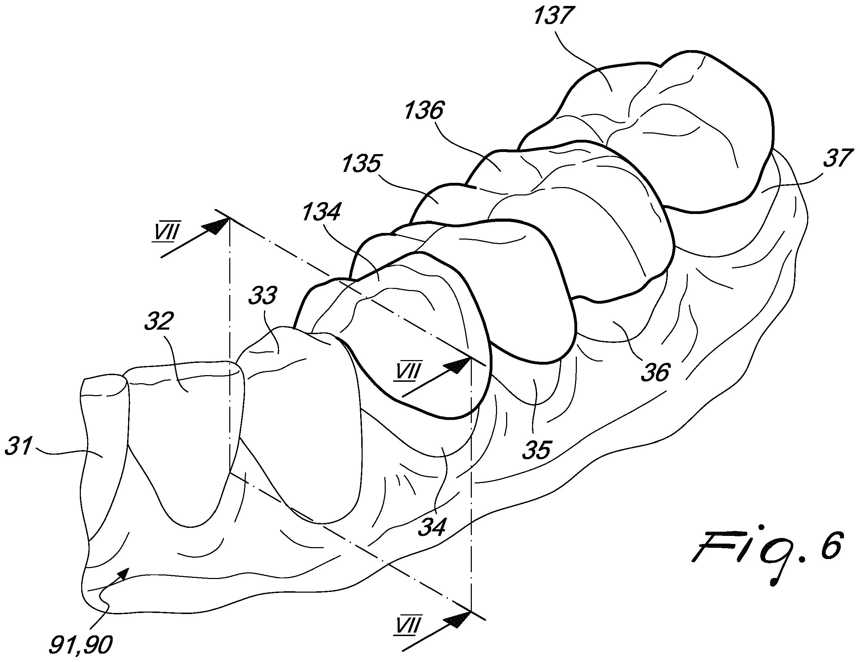

Figure 6 is a perspective detail view in which part of the dental overlays that are visible in Figure 5H are positioned on the set of teeth of the patient, in preparation for a direct mock-up procedure in one or more diatoric sectors of the set of teeth shown in Figure 1A;
Figure 7 is a longitudinal cross-sectional view taken along the plane marked VII-VII of one of the dental overlays shown in Figure 6 and the portion of the set of teeth underlying the dental overlay shown in this specific cross-section; and
Figure 8 is the view of Figure 7 at the end of a direct mock-up procedure on the portion of the set of teeth underlying the dental overlay shown in cross-section on the plane marked VII-VII.

In the description of the preferred and illustrated embodiments, elements that are identical in structure or function and/or elements that belong to a same structure or to a same functional group are designated by reference numbers with the same numeral component.

Furthermore, in the figures the reference numerals corresponding to the teeth of a patient are consistent with the terminology used by the ISO 3950:2016 standard. Thus, for example, the reference numeral 31 designates a permanent central incisor in a lower left quadrant of a set of teeth 90, while the reference numeral 32 designates a permanent lateral incisor in the same lower left quadrant. Similarly, the reference numeral 41 designates a permanent central incisor in a lower right quadrant of a set of teeth 90, while the reference numeral 42 designates a permanent lateral incisor in the same lower right quadrant.

Each method according to the invention comprises the first step discussed above, i.e., the design of ideal dental morphologies aimed at correcting one or more aesthetic (and optionally functional) defects of the set of teeth 90.

Typical examples of aesthetic defects of the set of teeth 90 can be stained teeth, discolored teeth, slightly crooked or broken teeth, gaps or abrasions in the surface of the teeth, or small imperfections in the shape or size of the teeth. Some functional defects of the set of teeth 90 can be, for example, abrasions, absence of a correct static occlusion, absence of a correct dynamic occlusion, incorrect curve of Spee or curve of Wilson, etc.

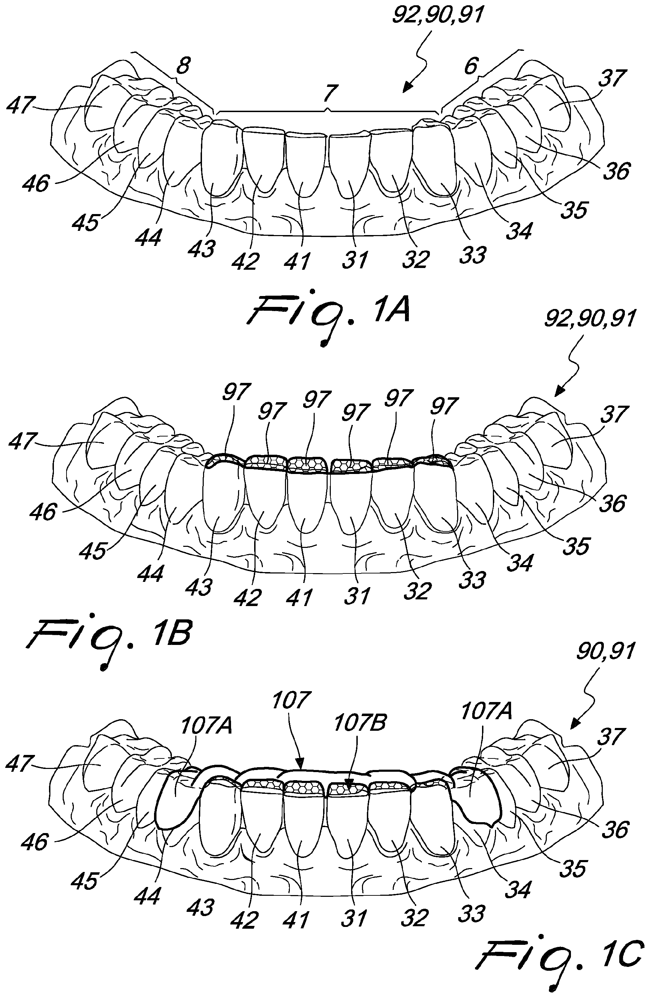

Preferably, the first step comprises a modification of at least one dental element of the set of teeth 90. For example, in Figure 1B, the modification entails the addition, to each tooth 31-33 and 41-43, of a respective raised portion 97.

In the preferred and illustrated embodiments, a model 92 reproduces the teeth of a lower arch 91 of the set of teeth 90. In other words, the model 92 replicates the set of teeth of the patient. However, embodiments are likewise possible in which the model 92 comprises one, several or all of the teeth of an upper arch (not shown) of the set of teeth 90.

In some variants, the design of ideal dental morphologies occurs in a CAD environment. In other words, in these specific variants, the model 92 is of virtual (i.e., digital) type, and the first step comprises a virtual (i.e., digital) modification of at least one dental element of the model 92, in a CAD environment.

In alternative variants, the model 92 is a tangible, physical object, preferably made of plaster. In these alternative variants, the design of the ideal dental morphologies occurs by making a diagnostic wax-up, in particular manual, on the model 92.

In each embodiment, the set of teeth 90 (and, therefore, the respective model 92) comprises a front group (or sector) 7 and diatoric sectors 6, 8.

In the figures, the front group 7 extends canine-to-canine.

Advantageously, the virtual modification can comprise subdividing the set of teeth 90 into sectors, for example distinguishing the front sector 7 from one or more of the diatoric sectors 6, 8. In this manner, the method according to the invention makes it possible for the clinic to optimally manage a virtual modeling of the ideal dental morphologies and, as a consequence, of potential corrective measures for the aesthetic defects of the set of teeth 90.

Preferably, the abovementioned sectors correspond to sextants (or to quadrants) which are defined in conformance with the abovementioned ISO standard.

For example, in Figure 1A, the front sector 7 corresponds to the lower anterior sextant 7 according to the ISO 3950:2016 standard, while the diatoric sectors 6 and 8 correspond to, respectively, the lower left sextant 6 and to the lower right sextant 8 according to the aforesaid standard.

In particularly advanced embodiments, the subdivision of the set of teeth 90 can comprise an individualization of one or more teeth (for example, an individualization of all the teeth of the diatoric sector 6 and/or of the diatoric sector 8). In this manner, the modification of the model 92 makes it possible to stay true to the individualization of the teeth which, in the real world as in the virtual world, are not joined to each other.

Basically, the subdivision of the set of teeth 90 enables a more precise modeling of the ideal dental morphologies.

In particular, the modification of the model 92 occurs in a Digital Smile Design context, so as to display the ideal dental morphologies in the CAD environment.

Furthermore, each method according to the invention comprises the second step discussed above, i.e., the production of the dental overlays, which are produced as physical (i.e. tangible) objects which contain the impression of the ideal dental morphologies.

In particular, the production of the dental overlays according to the invention occurs by milling.

Basically, in the second step, the actual production occurs of the dental overlays, which are produced so as to have the respective impressions that were designed in the first step.

For example, Figure 1C shows a portion of overlay 107B that is shaped so as to reproduce the impression of each raised portion 97 specified by the model 92 of Figure 1B.

Advantageously, the production of the dental overlays can occur in an individualized manner, by making one or more individual overlays for each one of the abovementioned sectors.

In each embodiment, the first step and the second step entail, respectively, the design (the first step) and the production (the second step) of: diatoric overlays, intended for respective teeth in the diatoric sectors 6, 8; and a front overlay, intended for managing the front group 7.

Basically, with the method according to the invention, mutually different overlays are obtained by direct mock-up, where the differences between the various overlays produced are dictated by the different clinical requirements deriving from the specific portions of the set of teeth 90 to be subjected to direct mock-up. In this manner, the overlays facilitate a reconstruction of the ideal dental morphologies, by the clinic, during the direct mock-up procedure.

In the figures, the dental overlays produced according to the method of the present invention are indicated by three-digit reference numerals, where the first digit is the number 1, while the remaining two digits identify a specific destination sector or tooth of the dental overlay in question, as given by Table 1 below.

**Table 1**

| *Overlays according to the invention* | |
|---|---|
| Reference no. | Destination tooth of the overlay |
| 107 | tooth/teeth in front sector 7 |
| 134 | tooth 34 |
| 135 | tooth 35 |
| 136 | tooth 36 |
| 137 | tooth 37 |
| 144 | tooth 44 |
| 145 | tooth 45 |
| 146 | tooth 46 |
| 147 | tooth 47 |

Basically, each method according to the invention makes it possible to provide specific overlays for each sector, thus optimizing the production process for all and only the sectors to be subjected to the mock-up procedure.

Preferably, the dental overlays produced by the method according to the invention are made of transparent (or translucent) material. In this manner, the clinic can see through these dental overlays and, if necessary, use photopolymerization lamps during the direct mock-up procedure.

In particular, the material that constitutes one or more of the dental overlays according to the invention is a shape-memory material.

The use of a shape-memory material makes it possible to use a same dental overlay multiple times over time, for example to execute repairs and/or retouches.

More preferably, the transparent material is designed to prevent the adhesion of resin (in particular, resin for composite material).

Basically, the transparent material advantageously has anti-adhesive properties that are such as to prevent, during direct mock-up procedure, the resin used for the packing from becoming attached to one or more of the dental overlays.

Even more preferably, each dental overlay is made of Temp Premium Flexible Transpa, made by Zirkonzahn^{®}, a transparent material that not only has the anti-adhesive properties discussed above, but is also an excellent compromise between flexibility and rigidity.

The use of a transparent material like that described above is particularly advantageous during the direct mock-up procedure, when the resin very closely hugs the teeth subjected to the aesthetic procedure, positioning itself on them stably and precisely.

In the preferred and illustrated embodiments, the front overlay 107 is intended for a direct mock-up on one or more teeth of the set of teeth 90 in the front sector 7.

In particular, the front overlay 107 is designed to emerge in the vestibule with respect to an incisal edge 96 of the set of teeth 90.

Basically, when the front overlay 107 is correctly applied to the set of teeth 90 in preparation for a direct mock-up procedure on the front sector 7, the front overlay 107 exceeds the incisal edge 96 in height, so leaving a space 98 between that front overlay 107 and the incisal edge 96 empty.

The dimensions of the empty space 98 are established in the virtual modeling step, which will be done by designing each dental element as desired in its definitive volume and shape.

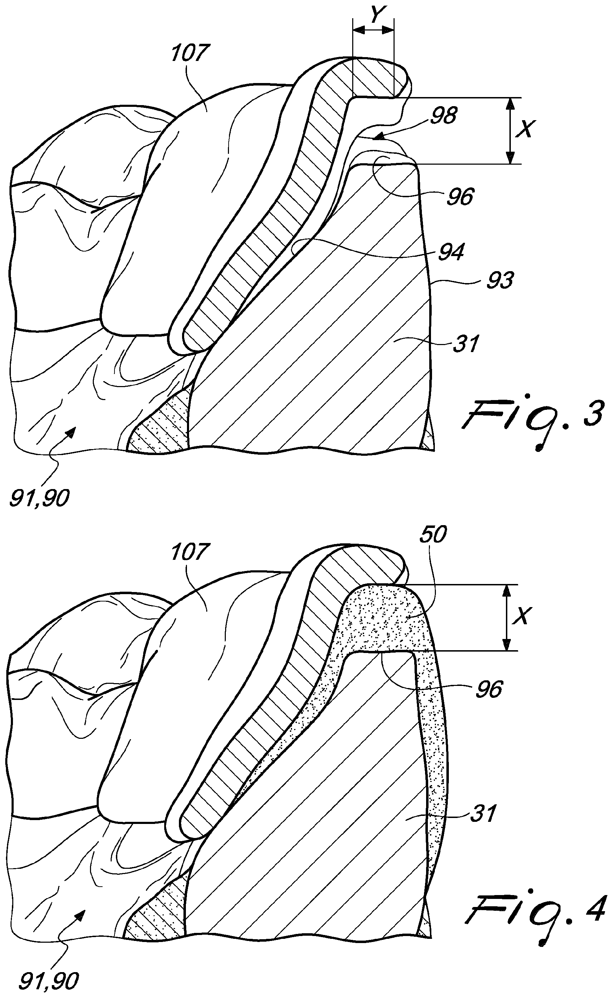

For example, in Figure 3, the dimensions X and Y (which determine the volume of the empty space 98 above the incisal edge 96) are design variables, established in advance during the second step (i.e., during the design).

Basically, during the direct mock-up procedure, the resin for composite material fills the empty space 98, producing a reconstruction/superstructure 50 capable of replicating the ideal dental morphologies that were envisaged in the design phase.

For example, in Figure 4, the reconstruction/superstructure 50 is aimed at physically reproducing the raised portion 97 envisaged by the modified model 92 of Figure 1B. As a consequence, in Figure 4, the dimension X represents a thickness of the reconstruction/superstructure 50, measured between the incisal edge 96 and the front overlay 107.

Preferably, the front overlay 107 is designed to cover, at least partially, each tooth 31-33 and 41-43 of the front sector 7.

For example, in the figures, there is only one front overlay 107, all of a piece, and it is designed to go over all the teeth 31-33 and 41-43 of the front sector 7.

Basically, the front overlay 107 is designed to replicate an impression of the ideal dental morphologies that it is desired to obtain in a palatal (or lingual) side 94, which constitutes the functional part of the set of teeth 90, up until the incisal edge 96.

Furthermore, the front overlay 107 is designed to ensure that the incisal edge 96 has the morphologies established in the design phase, so allowing the clinic to manage each vestibular wall manually in order to optimize the appearance of the front sector 7.

Basically, during a direct mock-up procedure on the front sector 7, any modification of the palatal side 94 and/or of the position of the incisal edge 96 will remain confined between the limits deriving from the positioning of the front overlay 107 (i.e., in Figure 3, the limits established by the dimensions X and Y). At the same time, the front overlay 107 will leave a vestibular side 93 of the set of teeth 90 uncovered, and the aesthetic appearance of this will need to be managed manually by the clinic. This approach makes it possible to respect the dental morphologies designed in the CAD environment 14, by allowing the front overlay 107 to fully manage the palatal/lingual surfaces, and leaving it to the clinic to manage the appearance of the vestibular surfaces which, in the front sector 7, are typically the more important ones for the patient from an aesthetic point of view.

Preferably, the front overlay 107 is provided with occlusal stops 107A.

The presence of occlusal stops 107A makes it possible to obtain a precise and unique positioning of the front overlay 107 with respect to the front sector 7.

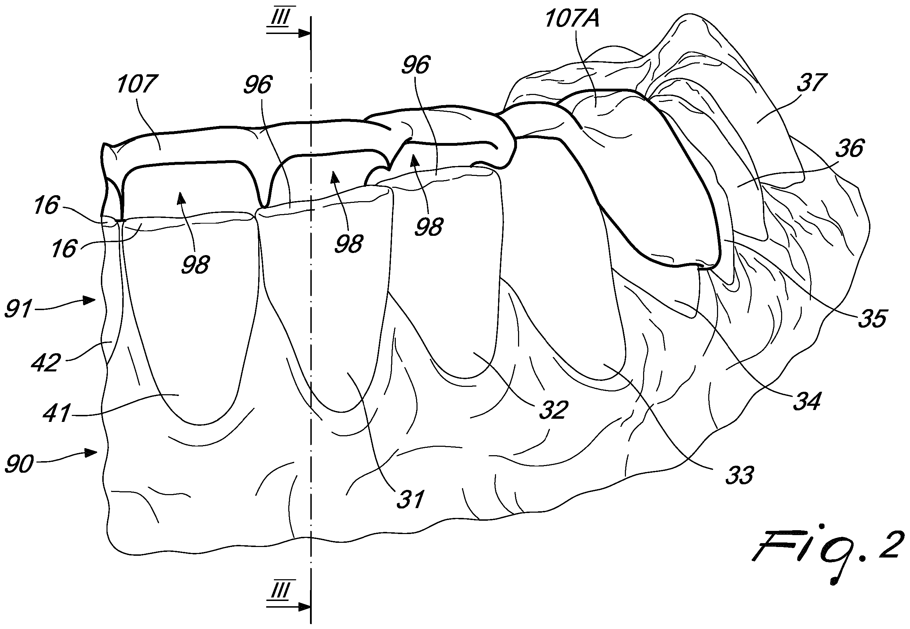

In particular, each occlusal stop 107A of the front overlay 107 is designed to engage with a respective premolar 34, 44 of the set of teeth 90 (for example, in the manner shown by Figures 1C and 2).

In each embodiment, the dental overlays obtained by the method according to the invention comprise a plurality of diatoric overlays.

In particular, each diatoric overlay is intended for a direct mock-up on a respective single tooth of the set of teeth 90 in the abovementioned diatoric sectors (in particular, in the diatoric sectors 6, 8).

In these figures, the overlays for the diatoric sectors 6 and 8 correspond, respectively, to the overlays 134-137 and 144-147.

In some variants, the plurality of diatoric overlays is intended for a corresponding plurality of teeth, all of which belong to a same diatoric sector.

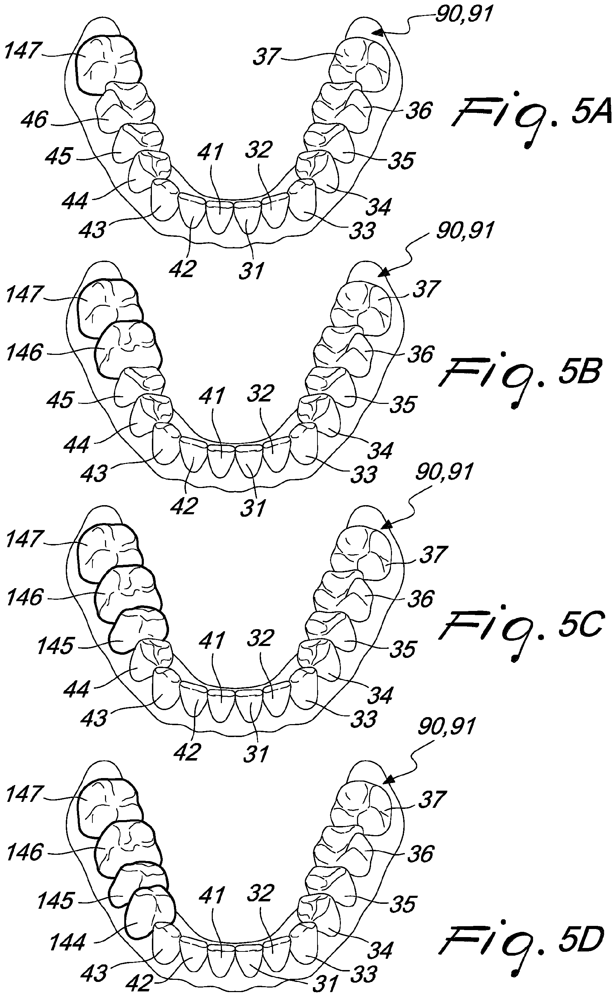

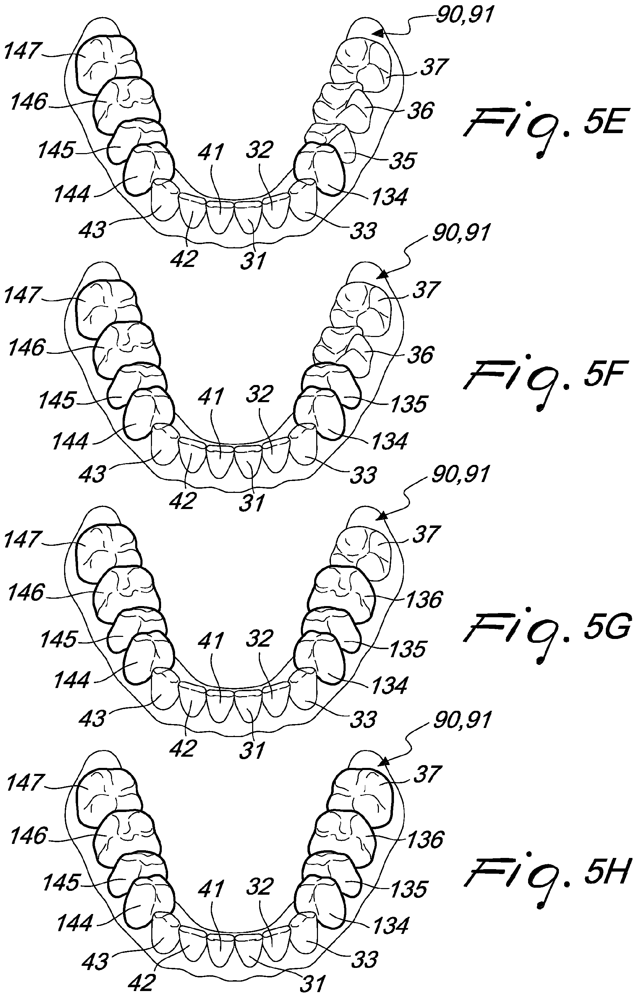

For example, in Figures 5B-5D, the diatoric overlays 144, 145, 146 and 147 are intended, respectively, for the teeth 44, 45, 46 and 47, all of which belong to the diatoric sector 8. By contrast, in Figures 5E-5H, the diatoric overlays 134, 135, 136 and 137 are intended, respectively, for the teeth 34, 35, 36 and 37, all of which belong to the diatoric sector 6.

In alternative variants, the plurality of diatoric overlays comprises a first group of diatoric overlays, intended for teeth that belong to a first diatoric sector, and a second group of diatoric overlays, intended for teeth that belong to a second diatoric sector.

For example, in each one of Figures 5E-5H, the plurality of diatoric overlays comprises all the diatoric overlays 144-147 and one or more of the diatoric overlays 134-137.

The use of individualized overlays of the diatoric type is particularly useful and practical during a direct mock-up procedure in one or more diatoric sectors, where the clinic can replicate the ideal dental morphologies in an individualized manner, tooth by tooth, so obtaining a perfect correspondence with the model 92 including from the point of view of proximal contacts.

Preferably, each diatoric overlay 134-37, 144-147 derives from an individualized design.

In particular, in the second step, each diatoric overlay 134-137, 144-147 is designed individually, as a function of the respective single tooth 34-37, 44-47.

For example, in Figures 5A-5H, each diatoric overlay 134-137, 144-147 is designed as a function of a respective single dental element (or tooth) 34-37, 44-47. More precisely, each diatoric overlay 134-137, 144-147 is contoured so as to allow a full 360° modification of the external appearance of the respective tooth 34-37, 44-47 during a suitable direct mock-up procedure. In this manner, dental overlays are obtained that are characterized by high precision. When the design is digital, such precision can be particularly increased.

Furthermore, in the figures, each diatoric overlay 134-137, 144-147 is designed to allow the passage of a so-called "strip" (an abrasive strip) or of dental floss for managing the points of contact between the diatoric overlay proper and the teeth adjacent to it. In this manner, during the direct mock-up procedure, the clinic can better manage the modeling of each reconstruction/superstructure 50. Furthermore, following the direct mock-up procedure, the patient can better manage the maintenance of oral hygiene of the set of teeth 90, for example by continuing to use dental floss as if it were a "natural" set of teeth (i.e., a set of teeth that has never been subjected to direct mock-up procedures).

Basically, an individualized approach makes it possible to individually manage all the teeth (or dental elements) of the diatoric sectors 6, 8 (by mounting a dam on each tooth and handling all the points of contact one by one), without settling for a single overlay that covers all the teeth together in a single packing. By contrast, the use of a single packing would additionally complicate both the handling of the proximal contacts and the filling of the resin, which needs to fill all the empty spaces 98 in a single "pour".

Preferably, each diatoric overlay 134-137, 144-147 has occlusal stops designed to engage with a vestibular equator and/or a palatal-lingual equator of the respective tooth 34-37; 44-47.

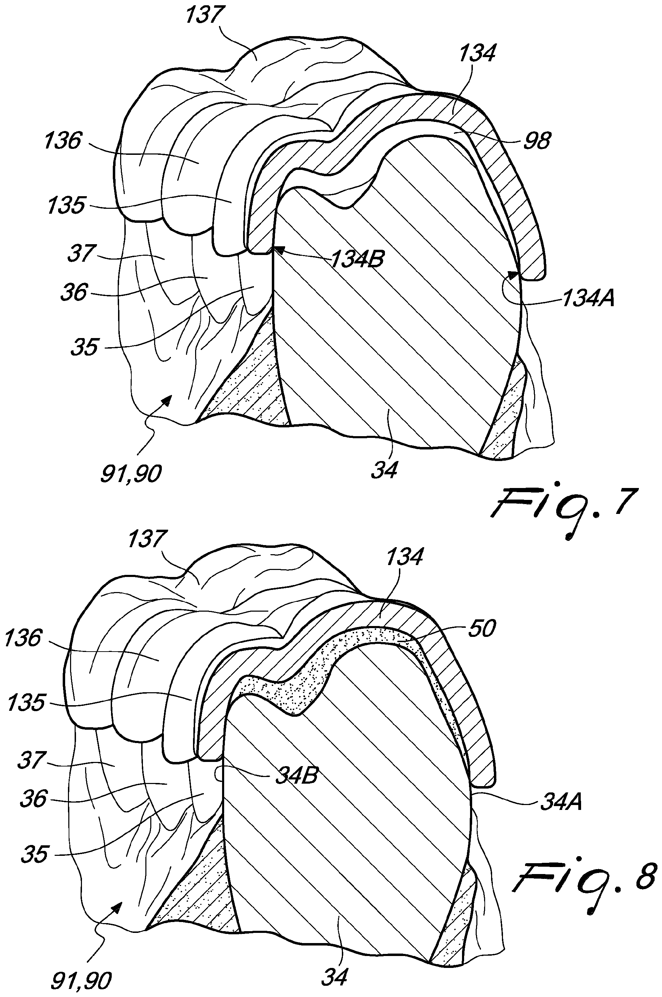

For example, in Figures 7-8, the occlusal stops 134A and 134B engage, respectively, a vestibular equator 34A and a palatal-lingual equator 34B of the tooth 34, so allowing a precise positioning of the diatoric overlay 134 with respect to that tooth 34.

In some preferred embodiments, each dental overlay is designed to be used with a support for an intraoral dam (which for diatoric overlays like those described above constitutes an individual intraoral dam).

A kit of dental overlays according to the invention comprises the front overlay 107 and at least two of the diatoric overlays 134-137, 144-147 described above.

For example, the abovementioned kit can comprise a plurality of diatoric overlays selected from those shown in Figures 5B-5H.

In particularly advanced embodiments, the abovementioned kit comprises all the diatoric overlays 134-137, 144-147.

Each kit of dental overlays according to the invention is particularly useful and practical during an aesthetic direct mock-up procedure like those mentioned above.

In particular, if the aesthetic direct mock-up procedure is for an entire arch of the set of teeth 90 (for example, all of the lower arch 91), it is necessary to first of all position the front overlay 107 (canine-to-canine) under a dam, finalizing the front sector 7 first. Subsequently the diatoric sectors 6 and 8 are finalized, using the diatoric overlays 134-137, 144-147.

In practice it has been found that the method and the kit according to the present invention fully achieve the set aim and objects, in that it makes it possible to overcome the limitations of the known art explained above.

The invention thus conceived is susceptible of numerous modifications and variations, all of which are within the scope of the appended claims.

By way of example, it is possible to customize one or more of the dental overlays on the basis of specific requirements, for example by giving this/those overlay(s) calibrated holes for the injection of resin.

Except where indicated otherwise, the various embodiments described above can be combined in order to provide further and/or alternative embodiments.

Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102024000005899 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for the design and subsequent production of dental overlays (107, 134-137, 144-147) by direct mock-up, said method comprising:
a first step, in which ideal dental morphologies are designed which are aimed at correcting one or more aesthetic and possibly functional defects of the set of teeth (90) of a patient, said set of teeth (90) comprising a front group (7), in particular a canine-to-canine group, and diatoric sectors (6, 8); and
a second step, in which said dental overlays (107, 134-137, 144-147) are produced as physical objects containing an impression of said ideal dental morphologies;
**characterized in that** said first and second steps entail, respectively, the design and production of:
- diatoric overlays (134-137; 144-147) of said dental overlays, intended for respective teeth (34-37; 44-47) in said diatoric sectors (6; 8), and
- a front overlay (107) of said dental overlays, intended for the management of said front group (7).

2. The method according to claim 1, wherein said dental overlays (107, 134-137, 144-147) are made of transparent material.

3. The method according to claim 2, wherein said transparent material is designed to prevent the adhesion of resin.

4. The method according to claim 1, wherein said front overlay (107) is designed to cover, at least partially, each tooth (31-33, 41-43) of said front sector (7).

5. The method according to claim 4, wherein said front overlay (107) is provided with occlusal stops (107A), each occlusal stop (107A) being designed in particular to engage a respective premolar (34, 44) of said set of teeth (90).

6. The method according to any one of the preceding claims, wherein each diatoric overlay (134-137, 144-147) has occlusal stops designed to engage with a vestibular equator and/or a palatal-lingual equator of the respective individual tooth (34-37; 44-47).

7. The method according to any of the preceding claims, wherein said first step comprises a virtual modification, in a CAD environment, of at least one dental element of a virtual model (92) of said set of teeth (90).

8. The method according to any one of the preceding claims, wherein said first step comprises performing a diagnostic wax-up on a physical model replicating said set of teeth (90).

9. A kit of dental overlays (107, 134-137, 144-147) produced in an individualized manner according to the method of any of the preceding claims.

10. Use of the kit of dental overlays (107, 134-137, 144-147) of claim 9 in an aesthetic direct mock-up procedure.
